# EUROPEAN PATENT APPLICATION

(11) **EP 1 729 035 A2**
(43) Date of publication of application: **06.12.2006**
(21) Application number: 06010871.9
(22) Date of filing: 26.05.2006
(51) Int. Cl.: F16H 55/36

(54) **Power transmission device**

(30) Priority: 31.05.2005 JP 2005159150
(71) Applicant: DENSO CORPORATION, Kariya-city, Aichi-pref. 448-8661 (JP); KABUSHIKI KAISHA TOYOTA JIDOSHOKKI, Kariya-shi, Aichi-ken (JP)
(72) Inventor: Kanou, Takekazu Int.Prop.Dept. DENSO CORPORATION, Kariya-city Aichi-pref. 448-8661 (JP); Nosaka, Michiyasu Int.Prop.Dept. DENSO CORPORATION, Kariya-city Aichi-pref. 448-8661 (JP); Tabuchi, Yasuo Int.Prop.Dept. DENSO CORPORATION, Kariya-city Aichi-pref. 448-8661 (JP); Nakashima, Masafumi Int.Prop.Dept. DENSO CORP., Kariya-city Aichi-pref. 448-8661 (JP); Akamatsu, Toshiaki Int.Prop.Dept.DENSO CORPORATION, Kariya-city Aichi-pref. 448-8661 (JP); Fukanuma, Tetsuhiko K.K. Toyota Jidoshokki, Kariya-shi Aichi-ken (JP)
(74) Representative: Klingseisen, Franz

(57) **Abstract**

A power transmission device includes a pulley 1, a hub 2 and a power shut-off member 3 and further includes a cap 4, one face of which is fastened to an end portion of a rotary shaft 5 by screwing and the other face of which is fastened to the power shut-off member by screwing, so as to transmit power from the power shut-off member to the rotary shaft 5. Power is transmitted between the rotary shaft and the cap not only by this screw fastening portion but also by utilizing a seat surface B or both seat surfaces A and B, wherein the seat surface A is formed on a forward end face 5a provided on the rotary shaft and the seat surface B is formed on a screw root portion (an expanded diameter portion) 5d.

## Description

### BACKGROUND OF THE INVENTION

### 1. Technical Field of the Invention

The present invention relates to a power transmission device having a torque limiter function. More specifically, the present invention relates to a power transmission device preferably used in a compressor used for a car air conditioner driven by a power source, such as an engine, via a belt.

### 2. Description of the Related Art

A refrigerant compressor used for a car air conditioner is driven by a power source, such as an engine, via a belt, a pulley and so forth. In order to disconnect the refrigerant compressor from the engine when necessary, an electromagnetic clutch is interposed between the refrigerant compressor and the engine. However, if no electromagnetic clutch is interposed between the refrigerant compressor and the engine, the manufacturing cost can be reduced. Therefore, the electromagnetic clutch is omitted in many cases. In this case, in the power transmission of a compressor used for a car air conditioner driven by a power source such as an engine, in order to avoid the occurrence of a problem in which a belt is damaged in the case where the compressor seizes, a countermeasure of installing a torque limiter, which is a member for shutting-off power, is taken.

Concerning this torque limiter system, the following mechanical torque limiter system, which is disclosed in the official gazette of JP-A-2003-206950, has been provided. In this mechanical torque limiter system, a portion of the power transmitting route is fastened by means of screw engagement. The portion of the power transmitting route is broken by utilizing an excessively strong axial force generated in the screw fastening portion by an excessively high intensity of torque generated in the case where the compressor has seized, so that the power transmission route can be cut off. In this torque limiter system, screw fastening is used. Therefore, the operational accuracy of the torque limiter is affected by an intensity of torque generated at the time of seizure and by a coefficient of friction between the screw portion and the seat surface which compose an engaging and fastening portion.

On the other hand, recently, there has been an active demand for reducing the power loss in the compressor and the power transmission. In order to reduce the power loss caused in a shaft sealing device and bearing, which is a sliding loss generated in a rotary shaft of the compressor, a technique of reducing a diameter of the rotary shaft is provided. When the diameter of the rotary shaft is reduced in a conventional power transmission having the above torque limiter, another problem may be caused. That is, when the diameter of the rotary shaft is reduced in the fastening structure of fastening the hub and the rotary shaft of the compressor in the conventional power transmission device for transmitting power to the compressor, a problem that the torque limiter does not operate appears.

The reason is described as follows. When a rotary shaft of a small diameter is used, the size of the screw portion provided in the rotary shaft is decreased. Therefore, due to the generation of an axial force which is necessary for the torque limiter mechanism to perform its function, the screw portion shuts off the torque transmission.

### SUMMARY OF THE INVENTION

The present invention has been accomplished to solve the above problems. An object of the present invention is to provide a power transmission device used for a compressor characterized in that: even when a diameter of a rotary shaft is small, a high fastening strength of a torque limiter can be ensured without deteriorating a mechanical strength of the rotary shaft; and a loss of transmitted power can be decreased.

A power transmission device of an embodiment of the present invention comprises: a pulley 1 rotated by a drive source; a cap 4 attached to one end portion of a rotary shaft 5; a power shut-off member 3, one face of which is screwed to an outer circumferential screw portion of the cap 4, the other face of which is mechanically connected to the pulley 1, the power shut-off member 3 being broken when an intensity of torque transmitted between the rotary shaft 5 and the pulley 1 is increased to higher than a predetermined intensity of torque and the torque transmission can be shutted off; and a rotary shaft screw portion provided on the rotary shaft 5, screwed to an inner circumferential screw portion provided inside the cap 4, wherein an expanded diameter portion, the diameter of which is larger than that of the screw of the rotary shaft screw portion, is provided in a root portion of the rotary shaft 5 screw portion, a first seat surface opposed to the expanded diameter portion is provided on an inner circumferential face of the cap 4, a second seat surface opposed to a shaft end of the rotary shaft 5 is provided on a bottom face of the cap 4, and an axial force generated by the screw engaging portion of the rotary shaft 5 and the cap 4 is received by at least one of the first and the second seat surface so as to transmit the torque. Due to the above structure, even when a rotary shaft of a small diameter is used, it is possible to endure a high fastening strength with the torque limiter (power shut-off member) without deteriorating the mechanical strength of the rotary shaft 5.

A power transmission device of another embodiment of the present invention comprises: a pulley 1 rotated by a drive source; a cap 4 engaged with one end portion of a rotary shaft 5 so that the cap 4 can be rotated integrally with the rotary shaft 5; and a power shut-off member 3, one face of which is screwed to an outer circumferential screw portion provided outside the cap 4, the other face of which is mechanically connected to the pulley 1, the power shut-off member 3 being broken by an axial force generated by the outer circumferential screw portion when an intensity of torque transmitted between the rotary shaft 5 and the pulley 1 increased to higher than a predetermined intensity of torque and the torque cannot be transmitted. Due to the above structure, even when a rotary shaft of a small diameter is used, it is possible to endure a high fastening strength with the power shut-off member without deteriorating the mechanical strength of the rotary shaft.

A power transmission device of still another embodiment of the present invention comprises: a pulley 1; a hub 2; a power shut-off member 3; and a cap 4, one inner face of which has an inner circumferential screw, which is screwed to a screw portion of the rotary shaft 5, and the other outer face of which has an outer circumferential screw portion, which is screwed to the power shut-off member 3, wherein power is transmitted by the cap 4 from the power shut-off member 3 to the rotary shaft 5. In addition to this screw fastening portion, by utilizing a seat surface B or by utilizing both a seat surfaces A and B which are the seat surface A of the end face 5a of the forward end portion provided on the rotary shaft 5 and the seat surface B of the screw root portion 5d, torque can be transmitted between the rotary shaft 5 and the cap 4. Due to the above structure it is possible to prevent a reduction in the mechanical strength of the rotary shaft 5, and further, it is possible to reduce the diameter of the rotary shaft 5. Therefore, it is possible to reduce a sliding loss caused in the shaft sealing device of the rotary shaft 5 and the bearing device.

In a power transmission device of the present invention, torque is transmitted only by the seat surface B of the rotary shaft 5 when an intensity of torque is low and torque is transmitted by both the seat surfaces A and B of the rotary shaft 5 when an intensity of torque is high.

In a power transmission device of the present invention, the seat surface B of the rotary shaft 5 is formed to be perpendicular with respect to the axis or the seat surface B is formed to be tapered with respect to the axis.

The present invention will be more fully understood from the description of preferred embodiments of the invention, as set forth below, together with the accompanying drawings.

### BRIEF DESCRIPTION OF THE DRAWINGS

In the drawings:
Fig. 1 is a sectional view showing an overall structure of a power transmission device of an embodiment of the present invention;
Fig. 2 is a sectional view showing a primary portion of the power transmission device shown in Fig. 1;
Fig. 3A is a view for explaining a torque transmission route at the time of a low intensity of torque in a power transmission device of the embodiment of the present invention;
Fig. 3B is a view for explaining a torque transmission route at the time of a high intensity of torque in a power transmission device of the embodiment of the present invention;

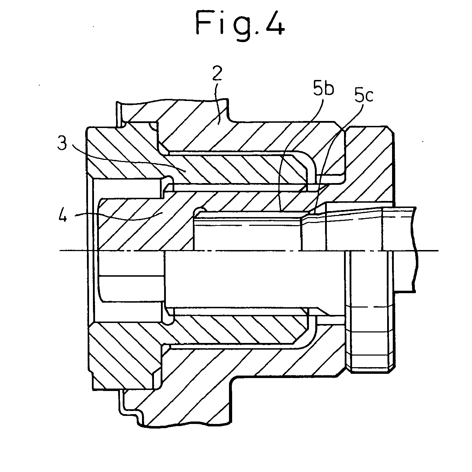

Fig. 4 is a sectional view showing a primary portion of a power transmission device previously proposed by the present applicant;
Fig. 5 is a sectional view showing an overall structure of a power transmission device of another embodiment of the present invention; and
Fig. 6 is a sectional view showing a primary portion of the power transmission device shown in Fig. 5.

### DESCRIPTION OF THE PREFERRED EMBODIMENTS

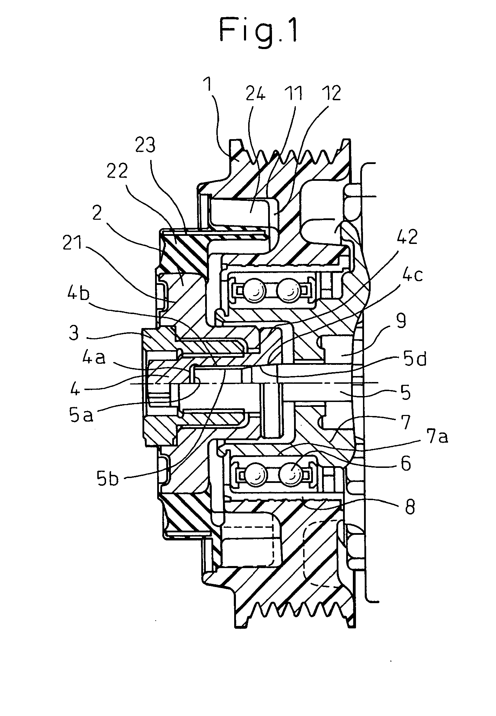

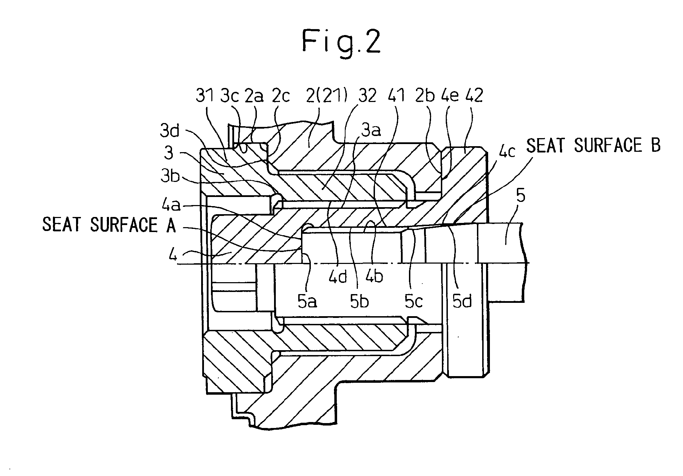

Referring to the drawings, a power transmission device of an embodiment of the present invention will be explained below. The power transmission device of the present invention is preferably incorporated into a compressor of an air conditioner for vehicle use (a car air conditioner). Fig. 1 is a sectional view showing an overall structure of the power transmission device of the embodiment of the present invention, and Fig. 2 is an enlarged sectional view showing a primary portion of the power transmission device shown in Fig. 1. The power transmission device of the present invention transmits power (torque) between a pulley 1, which is rotatablely attached to a casing 7 of a compressor which is a driven side rotary machine obtaining power from an engine or motor, and a hub 2 fixed to a rotary shaft 5 of the compressor, which is a driven side rotary machine, via a cap 4 and a power shut-off member 3 which functions as a torque limiter. The pulley 1 and the hub 2 are arranged on the same axis.

The pulley 1 is rotatably attached to a cylindrical boss portion 7a, which is provided on one end side of the casing 7 of the compressor, via a bearing 6 and a snap ring 8 having a sleeve ring. The pulley 1 is preferably molded out of a thermo-plastic synthetic resin, however, it may be made of a metal such as iron. In the case where the pulley 1 is made of resin, it is usual that the pulley 1, the snap ring 8 having a sleeve ring and the bearing 6 are integrally made by means of insert-molding. A belt (not shown) is wound round the outer circumferential face of the pulley 1, and the pulley 1 is rotated by power given from a device such as an engine or motor. The bearing 6 is engaged with the boss portion 7a. Therefore, the bearing 6 is prevented from moving in the axial direction by an end portion of the boss portion 7a and the snap ring 8 having a sleeve ring engaged in a groove formed on an outer circumferential face of the boss portion 7a. The casing 7 and the rotary shaft 5 are tightly sealed from each other by a shaft sealing device 9. Therefore, the refrigerant and oil are prevented, by the shaft sealing device 9, from leaking.

A forward end portion of the rotary shaft 5 of the compressor protrudes from the casing 7. A cap 4 made of metal is fastened to this forward end portion of the rotary shaft 5 by means of screw engagement. The screw fastening structure of the forward end portion of the rotary shaft 5 with the cap 4 is a characteristic portion of the present invention. The details of this structure will be described later.

The power shut-off member 3, which functions as a torque limiter, is formed into a square-pipe shape or a cylindrical shape having a large outer diameter portion 31, the outer diameter of which is large, and also having a small outer diameter portion 32, the outer diameter of which is small. The large outer diameter portion 31 is engaged with an inner hub 21 which is a portion of the inner hub 21 described later. On an inner circumferential face of the small outer diameter portion 32, a screw portion 3a is formed and engaged with an outer circumferential screw portion 4d, which is formed on an outer circumferential face of the cap 4, by means of screwing. An inner diameter of the large outer diameter portion 31 is a little larger than an inner diameter of the small outer diameter portion 32. In a transition portion between both the inner circumferential faces, a cutout portion is provided, which forms a breaking portion 3b. Accordingly, when the power shut-off member 3 is given an excessively strong axial force, the breaking portion 3b can be broken.

For example, the hub 2 includes: the inner hub 21; a cylindrical portion 22 made of elastic material; an outer hub 23; and a hub side protrusion and recess portion 24 made of elastic material. The inner hub 21 is formed into a substantial cylindrical-shape. An inner circumferential face of the inner hub 21 is formed into a shape which is substantially suited to an outer circumferential face of the power shut-off member 3, and both are joined to each other by means of engagement. Concerning the joining accomplished by engagement, the engagement portion 2a of the inner circumferential face of the inner hub 21 and the engagement portion 3c of the outer circumferential face of the large outer diameter portion 31 of the power shut-off member 3 may be formed into the same polygon and both may be fixed to each other by means of spigot engagement. Alternatively, both may be engaged with each other by means of screw engagement in the same manner as that of the joining of the cap 4 with the power shut-off member 3.

The outer hub 23 is formed into a cylindrical-shape and made of a metal such as iron in the same manner as that of the inner hub 21.

The cylindrical portion 22 is made of elastic material such as rubber or resin and arranged and held between the inner hub 21 and the outer hub 23. The cylindrical portion 22 is bonded onto an outer circumferential face of the inner hub 21 and an inner circumferential face of the outer hub 23 by means of adhesion. These three or four components, to which the hub side protrusion and recess portion 24 is added, may be integrally formed by means of insert molding. The elastic member of the cylindrical portion 22 functions not only as a torque transmitting member but also as a torque damper.

In a substantial rear half portion on the rear side of the outer hub 23, the hub side protrusion and recess portion 24, which is made of the same elastic material as that of the cylindrical portion 22, is provided. The hub side protrusion and recess portion 24 may be bonded to the outer hub 23 by means of adhesion. This hub side protrusion and recess portion 24 is joined to the pulley side protrusion and recess portion 12 of a pulley 1 described later by means of protrusion and recess engagement.

In the above explanation, the hub 2 is formed out of four components including: the inner hub 21; the cylindrical portion 22; the outer hub 23; and the hub side protrusion and recess portion 24. However, the outer hub 23 can be omitted and the hub 2 can be formed out of two components including: the inner hub 21; the cylindrical portion 22; and the hub side protrusion and recess portion 24.

On the other hand, on an end face of the front side of the pulley 1, a pocket portion 11 which receives the hub side protrusion and recess portion 24 of the hub 2 is formed. On the side of the pocket portion 11, the pulley side protrusion and recess portion 12 is formed. When the pulley side protrusion and recess portion 12 is engaged with the hub side protrusion and recess portion 24 of the hub 2 by means of protrusion and recess engagement, the pulley 1 and the hub 2 are joined to each other. Therefore, power can be transmitted from the pulley 1 to the hub 2.

Next, explanations will be made into a fastening structure by which the rotary shaft 5 and the cap 4 are fastened to each other. This fastening structure is a characteristic portion of the present invention.

The rotary shaft 5 includes: a screw portion 5b; an end face 5a; a relief portion 5c; and a screw root portion (an expanded diameter portion) 5d, wherein these components are arranged in this order from the end face 5a of a forward end portion. The relief portion 5c is necessary when the screw portion 5b is machined on the rotary shaft 5. This relief portion 5c is the minimum diameter portion of the shaft. In this embodiment, this relief portion 5c is provided, the size of which is reduced. In Fig. 2, the screw root portion 5d is formed into a tapered shape and is contacted with an inner face of the cap 4.

The cap 4 includes: an accommodating portion 41 for accommodating a forward end portion of the rotary shaft 5; and a flange portion 42 coming into contact with the hub 2. On an inner circumferential face of the accommodating portion 41, an inner circumferential screw portion 4b is formed and fastened to the screw portion 5b of the rotary shaft 5 by means of screw engagement. When an inner bottom face (a second seat surface) 4a of the accommodating portion 41 comes into contact with the forward end face 5a of the rotary shaft 5, it is possible for the inner bottom face (the second seat surface) 4a to receive a load given in the axial direction. That is, the forward end face 5a of the rotary shaft 5 is a seat surface A to receive the load given in the axial direction. An inner circumferential face (a first seat surface) 4c on the entry side of the accommodating portion 41 is formed into a tapered shape. When the inner circumferential face (the first seat surface) 4c comes into contact with the screw root portion (the expanded diameter portion) 5d of the rotary shaft 5, the inner circumferential face (the first seat surface) 4c can receive a load given in the axial direction. That is, the screw root portion 5d of the rotary shaft 5 is a seat surface B designed to receive a load given in the axial direction. As described above, in this embodiment, the load given in the axial direction can be received by two seat surfaces A and B. Therefore, it is possible to reduce a load in the axial direction given to the relief portion 5c.

As described above, on the outer circumferential face of the cap 4, the outer circumferential screw portion 4d is formed and fastened to the power shut-off member 3 by the engagement of screwing. A face (a seat surface) 4e on the front side of the flange portion 42 of the cap 4 comes into contact with a face (a seat surface) 2b on the rear side of the hub 2 (the inner hub 21). On the other hand, a face (a seat surface) 3d on the rear side of the large outer diameter portion 31 of the power shut-off member 3 comes into contact with a face (a seat surface) 2c on the front side of the hub 2 (the inner hub 21). Due to the above structure, the hub 2 (the inner hub 21) can be interposed between the power shut-off member 3 and the cap 4.

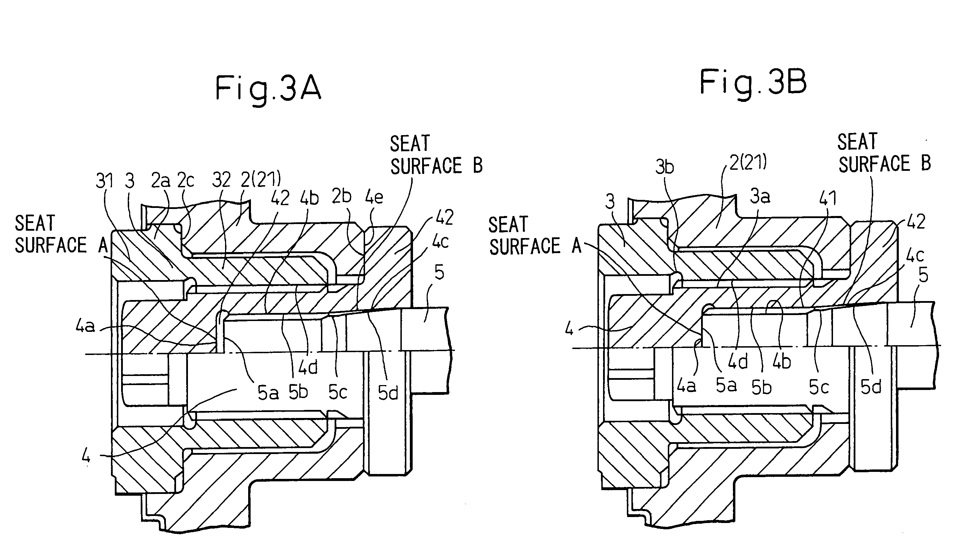

Fig. 3A is a view for explaining a torque transmission route at the time of a low intensity torque in the power transmission device of the embodiment of the present invention, and Fig. 3B is a view for explaining a torque transmission route at the time of a high intensity torque in the power transmission device of the embodiment of the present invention. As shown in Fig. 3A, in the case of the low intensity torque, the inner bottom face (the second seat surface) 4a of the accommodating portion 41 of the cap 4 and the forward end face 5a of the rotary shaft 5 are separate from each other, and the tapered inner circumferential face (the first seat surface) 4c of the accommodating portion 41 of the cap 4 and the tapered screw root portion (the expanded diameter portion) 5d of the rotary shaft 5 can be contacted with each other. In this way, the load given in the axial direction can be received only by the seat surface B.

As shown in Fig. 3B, when the high intensity torque is generated, the tapered inner circumferential face (the first seat surface) 4c of the cap 4 coming into contact with the seat surface B sinks, and the rotary shaft 5 deeply moves into the accommodating portion 41 of the cap 4, and the forward end face (the seat surface A) 5a comes into contact with the inner bottom face (the second seat surface) 4a. Although the tapered inner circumferential face (the first seat surface) 4c of the cap 4 sinks, it still comes into contact with the screw root portion (the expanded diameter portion) 5d. Accordingly, at the time of the high intensity torque, both the seat surfaces A and B receive the load given in the axial direction.

In the present embodiment, material of the cap is softer than that of the rotary shaft.

Next, explanations will be made into operation of the power transmission in the case where an excessively high intensity torque is given to the power transmission of the present embodiment. Power (torque) generated by an external drive source is transmitted from the pulley 1 to the hub 2 by the protrusion and recess engagement portion. Then, the thus transmitted power is further transmitted to the power shut-off member 3 by the spigot engagement portion. Furthermore, power is transmitted from the power shut-off member 3 to the cap 4 by the screw engagement portion. However, power is transmitted between the cap 4 and the rotary shaft 5 not only by the screw engagement portions of both the cap 4 and the rotary shaft 5 but also by a frictional force generated by the axial force between the rotary shaft 5 and the cap 4 when the forward end face 5a of the rotary shaft 5 comes into contact with the inner bottom face 4a of the cap 4 and also when the tapered screw root portion 5d of the rotary shaft 5 comes into contact with the tapered inner circumferential face 5c of the cap 4.

On the other hand, the torque transmitted between the power shut-off member 3 and the cap 4 is converted into an axial force when the face (the seat surface) 3d on the rear side of the large outer diameter portion 31 of the power shut-off member 3 comes into contact with the face (the seat surface) 2c on the front side of the hub 2 (the inner hub 21). The annular flange portion 42 of the cap 4 protrudes in the radial direction with respect to the axis of the rotary shaft 5 and comes into contact with the face (the seat surface) 2b on the rear side of the hub 2 (the inner hub 21). Accordingly, the axial force given to the hub 2 (the inner hub 21) from the power shut-off member 3 is received by the face (the seat surface) 4e on the front side of the flange portion 42 of the cap 4.

The axial force, which is transmitted from the hub 2 (the inner hub 21) to the power shut-off member 3 via the face (the seat surface) 3d on the rear side, is received by the second screw portion 4d of the cap 4 via the screw portion 3a of the power shut-off member 3. Further, the axial force is transmitted to the rotary shaft 5 when the inner bottom face 4a of the cap 4 comes into contact with the forward end face 5a of the rotary shaft 5 (the seat surface A) and also when the tapered inner circumferential face 4c of the cap 4 comes into contact with the tapered screw root portion 5d of the rotary shaft 5 (the seat surface B) and also when the inner circumferential screw portion 4b of the cap 4 is fastened to the screw portion 5b of the rotary shaft 5 by means of screwing. At the same time, the torque is transmitted.

The power shut-off member 3 includes a breaking portion 3b, the cross-section of which is reduced, having a cutout portion. Therefore, when the screw portion 3a and the outer circumferential screw portion 4d are fastened to each other by an excessively high intensity of torque generated at the time of seizure of a compressor, the breaking portion 3b provided in the power shut-off member 3 is broken, so that it is possible to avoid the occurrence of a problem in which a belt of a vehicle is cut off. At this time, a contact face of the front side face (the seat surface) 4e, which is a face for receiving an axial force of the flange portion 42 of the cap 4, and the rear side face (the seat surface) 2b of the hub 2 (the inner hub 21) can have a sufficiently large area. Accordingly, it is possible to sufficiently reduce a surface pressure acting on the flange portion 42 of the cap 4. Further, as the axial force acting between the cap 4 and the rotary shaft 5 can be received by the two seat surfaces A and B described before, it is possible to reduce a load given to the relief portion 5c which is the minimum diameter portion of the rotary shaft 5.

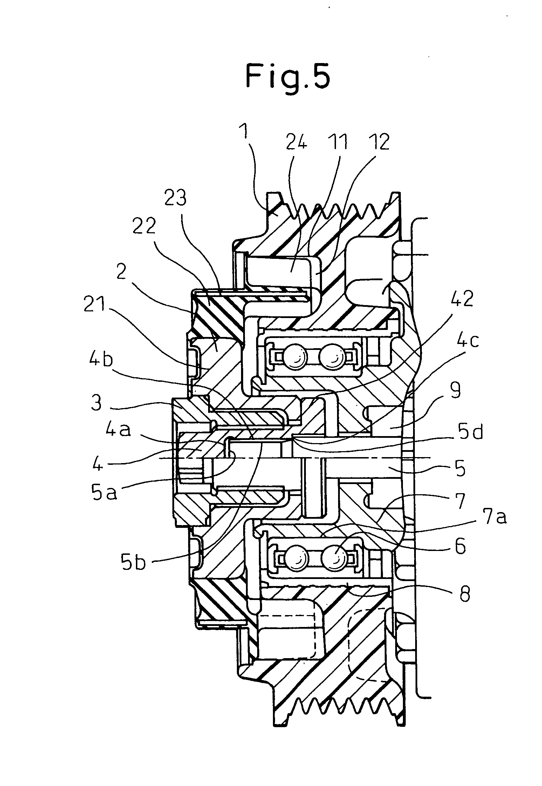

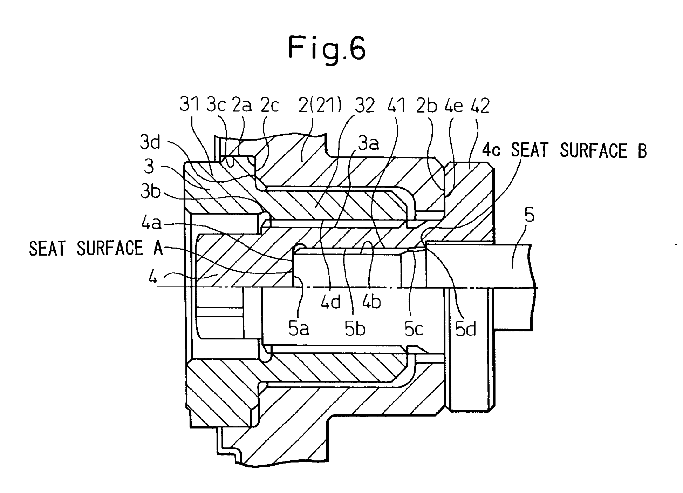

In this connection, in the embodiment described above, the screw root portion 5d, which is the seat surface B of the rotary shaft 5, is formed into a tapered shape. However, as shown in Figs. 5 and 6, the screw root portion 5d may be formed into a perpendicular shape. In this case, of course, the inner circumferential face 4c of the cap 4, which is on the receiving side, has a perpendicular face.

As explained above, according to the present invention, torque can be transmitted between the rotary shaft and the cap by the two seat surface A and B. Therefore., an intensity of torque given to the relief portion of the rotary shaft can be reduced and a reduction in the mechanical strength of the rotary shaft can be prevented and a diameter of the rotary shaft can be decreased. As a result, a power loss in the compressor can be reduced.

In this connection, in the above embodiment, material of the cap is softer than that of the rotary shaft so that the cap can sink. However, material of the rotary shaft may be softer than that of the cap so that the rotary shaft can sink.

While the invention has been described by reference to specific embodiments chosen for purposes of illustration, it should be apparent that numerous modifications could be made thereto, by those skilled in the art, without departing from the basic concept and scope of the invention.

## Claims

1. A power transmission device comprising:
a pulley rotated by a drive source, rotatably attached to a casing of a driven side rotary machine;
a cap attached to one end portion of a rotary shaft of the driven side rotary machine;
a power shut-off member, one face of which is screwed to an outer circumferential screw portion provided outside the cap, the other face of which is mechanically connected to the pulley, the power shut-off member being broken by an axial force generated by the outer circumferential screw portion when an intensity of torque transmitted between the rotary shaft and the pulley is increased to higher than a predetermined intensity of torque and shutting off the torque transmission; and
a rotary shaft screw portion provided on the rotary shaft, screwed to an inner circumferential screw portion provided inside the cap, wherein
an expanded diameter portion, the diameter of which is larger than that of the screw of the rotary shaft screw portion, is provided in a root portion of the rotary shaft screw portion,
a first seat surface opposed to the expanded diameter portion is provided on an inner circumferential face of the cap,
a second seat surface opposed to a shaft end of the rotary shaft is provided on a bottom face of the cap, and
an axial force generated by the rotary shaft screw portion and the inner circumferential screw portion is received by at least one of the first and the second seat surface so as to transmit the torque.

2. A power transmission device comprising:
a pulley rotated by a drive source, rotatably attached to a casing of a driven side rotary machine;
a cap engaged with one end portion of a rotary shaft of the driven side rotary machine so that the cap can be rotated integrally with the rotary shaft; and
a power shut-off member, one face of which is screwed to an outer circumferential screw portion provided outside the cap, the other face of which is mechanically connected to the pulley, the power shut-off member being broken by an axial force generated by the outer circumferential screw portion when an intensity of torque transmitted between the rotary shaft and the pulley is increased higher than a predetermined intensity of torque and shutting off the torque transmission.

3. A power transmission device comprising:
a pulley rotated by a drive source, rotatably attached to a casing of a driven side rotary machine;
a cap attached to a shaft end portion of a rotary shaft of the driven side rotary machine;
a hub connected to the pulley; and
a power shut-off member interposed between the hub and the cap, for shutting off an excessively high intensity of torque given between the rotary shaft and the pulley,
the power transmission further comprising:
an inner circumferential screw portion formed inside the cap, screwed to a rotary shaft screw portion provided at a shaft end of the rotary shaft;
an outer circumferential screw portion formed outside the cap, screwed to a power transmission member screw portion provided in the power transmission member;
a seat surface A provided at a shaft end of the rotary shaft, formed on an end face opposed to a bottom face of the cap; and
a seat surface B in a screw root portion of the rotary shaft, wherein
torque is transmitted between the rotary shaft and the cap by utilizing the seat surface B or by utilizing both the seat surfaces A and B.

4. A power transmission device according to claim 3, wherein torque is transmitted only by the seat surface B when an intensity of torque is low and torque is transmitted by both the seat surfaces A and B when an intensity of torque is high.

5. A power transmission device according to claim 3, wherein the seat surface B is formed to be perpendicular with respect to the axial line or the seat surface B is formed to be tapered with respect to the axial line.

6. A power transmission device according to claim 4, wherein the seat surface B is formed to be perpendicular with respect to the axial line or the seat surface B is formed to be tapered with respect to the axial line.
